# FASCICULE DE BREVET EUROPEEN

(11) **EP 0 526 278 B1**
(45) Date de publication et mention de la délivrance du brevet: **18.12.1996**
(21) Numéro de dépôt: 92401825.2
(22) Date de dépôt: 26.06.1992
(51) Int. Cl.: C12G 1/06, B01J 8/00

(54) **Procédé de délivrance d'une quantité déterminée de particules en suspension dans un fluide et appareil pour l'exécution de ce procédé**
Prozess zur Abgabe einer vorbestimmten Menge von in Suspension eines Fluides befindlichen Partikeln und Einrichtung zur Durchführung dieses Prozesses
Process for delivering a predetermined quantity of particles suspended in a fluid and apparatus for carrying out this process

(30) Priorité: 28.06.1991 FR 9108081
(43) Date de publication de la demande: 03.02.1993
(73) Titulaire: CHAMPAGNE MOET & CHANDON, 51200 Epernay (FR)
(72) Inventeur: Masclet, Georges Jean Alix, F-51200 Epernay (FR); Hennequin, Dominique André Pierre, F-51100 Reims (FR); Houlmont, Alain Michel, F-51150 Plivot (FR)
(74) Mandataire: Durand, Yves Armand Louis

(56) Documents cités:
- EP-A- 0 179 678
- DE-A- 3 039 210
- PATENT ABSTRACTS OF JAPAN vol. 5, no. 62 (C-52)(734) 25 Avril 1981

## Description

La présente invention se rapporte d'une manière générale à un procédé de délivrance d'une quantité déterminée et précise de particules en suspension dans un fluide.

Elle vise également un appareil pour la mise en oeuvre de ce procédé.

Depuis quelques années, pour l'élaboration du champagne, on utilise une nouvelle technique pour supprimer l'étape du remuage des bouteilles qui est une opération longue et coûteuse.

Cette technique consiste à inclure les levures nécessaires à la fermentation en bouteille, dans des billes d'alginate gélifié de quelques millimètres de diamètre et qui sont introduites dans les bouteilles.

Toutefois, la constitution et le caractère gélifié de ces billes sont tels qu'il est très difficile de les manipuler lorsqu'elles sont en vrac, surtout lorsqu'elles sont à l'état humide prêtes à l'emploi, et par conséquent de les doser d'une manière suffisamment précise avec les systèmes de dosage existant actuellement.

Autrement dit, il convient de résoudre le problème du dosage des billes sur les chaînes d'embouteillage, avec une précision suffisante et à une cadence pouvant atteindre 20.000 bouteilles/heure, tout en préservant l'intégrité physique des billes.

Pour résoudre ce problème, on a déjà proposé, avant de doser les billes dans les bouteilles de les mettre en suspension dans un liquide, le maintien en suspension étant obtenu par une agitation mécanique (FR-A-2 571 135).

Toutefois, on a constaté que les différents systèmes d'agitation mécanique testés ne permettaient pas d'obtenir une répartition homogène des billes dans le liquide, risquaient d'altérer l'intégrité physique des billes, et en tout cas ne permettaient pas d'obtenir un dosage précis et reproductible des billes dans les bouteilles.

Aussi la présente invention a pour but de remédier notamment à ces inconvénients, en proposant un procédé et un appareil permettant d'alimenter les bouteilles avec une quantité déterminée, précise et reproductible de billes.

A cet effet, l'invention a pour objet, d'une manière générale, un procédé de délivrance d'une quantité déterminée de particules en suspension dans un fluide, la masse volumique des particules étant supérieure à celle dudit fluide, caractérisé en ce que ladite suspension est une suspension obtenue en réalisant un lit fluidisé ayant une expansion prédéterminée correspondant à une concentration déterminée de particules dans le fluide, ce après quoi on prélève une partie de cette suspension en lit fluidisé et on la dose avant de l'utiliser pour une application nécessitant l'emploi d'une quantité déterminée de particules.

En d'autres termes, le procédé de l'invention permet d'alimenter un système de dosage volumétrique avec une quantité très précise et reproductible de particules en suspension dans un fluide, lequel système de dosage peut ensuite libérer son contenu dans un récipient quelconque.

Suivant une caractéristique particulière de ce procédé, le fluide précité est un liquide, tel que par exemple du vin.

On précisera que les particules en suspension dans le fluide peuvent être par exemple des billes de gel d'alginate dans lesquelles sont éventuellement incorporées des levures.

L'invention concerne encore un appareil pour la mise en oeuvre du procédé répondant à l'une et/ou l'autre des caractéristiques ci-dessus, et du type comprenant un récipient tel que par exemple une colonne, permettant la réalisation d'un lit fluidisé de particules en suspension dans un fluide, caractérisé en ce que ledit récipient est raccordé par au moins une conduite débouchant dans une partie du récipient où le lit fluidisé est formé, à un dispositif de dosage volumétrique de la suspension prélevée dans le récipient, lequel dispositif de dosage est susceptible de communiquer avec un moyen nécessitant l'utilisation d'une quantité déterminée et précise de particules. Un tel moyen peut être constitué par une bouteille par exemple.

Cet appareil est encore caractérisé en ce que le récipient précité est alimenté en particules par au moins un conduit débouchant dans ledit récipient.

Ce récipient est par ailleurs alimenté en fluide par au moins un conduit raccordé à une source de fluide et débouchant dans le récipient (R), de préférence à la partie supérieure de celui-ci.

On précisera encore ici que le dispositif de dosage volumétrique est apte à doser une suspension de particules, constituée par exemple de billes de gel, tel que gel d'alginate, en suspension dans un liquide tel que le vin.

Le procédé et l'appareil de cette invention s'appliquent notamment à l'élaboration d'un vin effervescent par la méthode dite "méthode champenoise", nécessitant, pour la mise en oeuvre de la nouvelle technique évoquée plus haut, l'introduction dans les bouteilles d'une quantité précise de billes de gel immobilisant des levures.

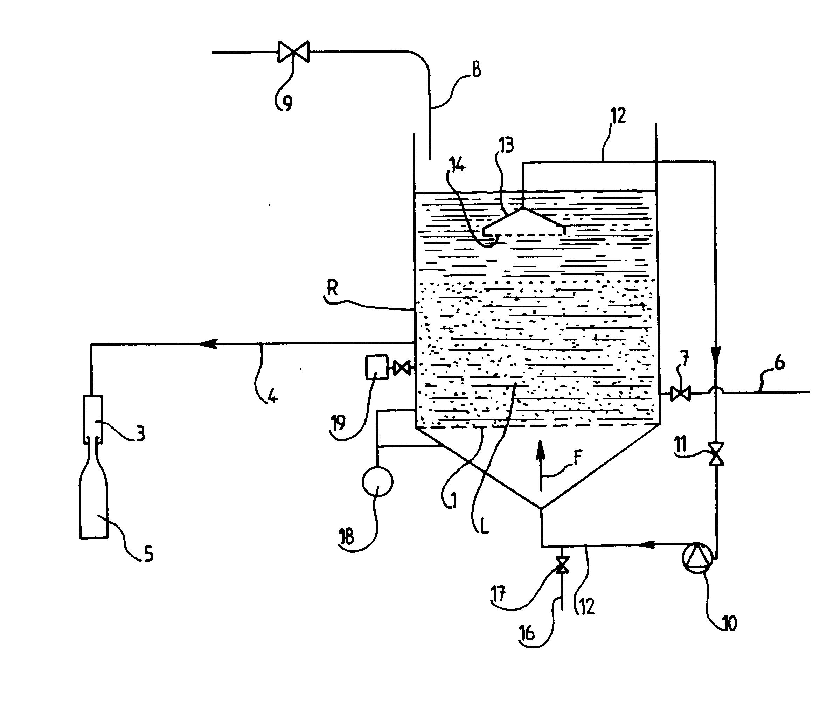

Mais d'autre avantages et caractéristiques de l'invention apparaîtront mieux dans la description détaillée qui suit et se réfère au dessin unique annexé, donné uniquement à titre d'exemple, et montrant de façon très schématique une installation conforme à cette invention.

En se reportant à cette figure, on voit un récipient R, formant par exemple une colonne cylindrique, à la base duquel est prévue une grille 1 au dessus de laquelle peut être formée par fluidisation une suspension homogène de particules, par exemple des particules de gel d'alginate contenant éventuellement des levures, dans un fluide, tel que par exemple un liquide constitué par du vin.

La colonne R est raccordée à un dispositif de dosage volumétrique montré schématiquement en 3 par l'intermédiaire d'au moins une conduite 4 dont le volume intérieur est de préférence beaucoup plus faible que le volume d'une dose à délivrer par le dispositif 3, et qui débouche dans une partie de la colonne R où le lit fluidisé est obtenu.

Le dispositif 3 de dosage volumétrique de la suspension prélevée dans le colonne R est aménagé pour communiquer avec un récipient, tel que par exemple une bouteille 5 devant utiliser une quantité déterminée et précise de particules pour réaliser par exemple une fermentation du liquide contenu dans cette bouteille, tel que du vin sucré.

On a montré en 6 un conduit équipé d'un système d'obturation 7 conçu pour permettre ou stopper de façon convenable la délivrance des particules. Ce conduit 6 est raccordé à une source d'alimentation de particules (non représentée) véhiculées par exemple par le même fluide que celui présent dans le récipient R, et débouche dans la partie inférieure de la colonne R au-dessus de la grille 1.

L'alimentation en fluide, tel que par exemple du vin, est réalisée par un conduit 8 équipé de vannes 9 et débouchant dans le récipient R, par exemple à la partie supérieure de celui-ci.

Une conduite 12 munie d'une vanne 11 et équipée d'une pompe 10, permet le recyclage du fluide (vin par exemple) du lit fluidisé vers la partie basse de la colonne R. A son extrémité débouchant en partie haute de la colonne R, le conduit 12 est muni d'une partie par exemple en forme d'entonnoir 13 équipée d'une grille ou analogue 14, pouvant retenir les particules ou billes susceptibles de s'échapper du lit fluidisé, et pouvant laisser passer le trop-plein de liquide qui est recyclé par le conduit 12 dans la colonne R afin de maintenir la fluidisation.

On a montré en 16 une conduite de vidange avec vanne 17, en 18 un appareil de mesure de pression différentielle, et en 19 un détecteur de contrôle de l'expansion du lit fluidisé formé dans la colonne R.

Mais, pour une meilleure compréhension de l'invention, on expliquera brièvement ci-après le fonctionnement de l'appareil qui vient d'être décrit.

On réalise dans la colonne R un lit fluidisé L ayant une expansion prédéterminée correspondant à une concentration déterminée de particules (billes de gel d'alginate) envoyées par le conduit 6 dans un liquide (vin), lui-même envoyé au travers de la grille 1 suivant la flèche F par le conduit 8 et éventuellement le conduit 12.

Lorsque l'expansion déterminée et désirée pour l'utilisation du lit fluidisé L sera atteinte, une partie du lit fluidisé sera alors acheminée dans la bouteille 5 via la conduite 4 et le dispositif de dosage volumétrique 3 qui pourra être d'un type approprié quelconque et apte à doser une suspension de particules qui, dans l'application particulière envisagée, est une suspension constituée de billes de gel d'alginate en suspension dans du vin.

Ainsi, la combinaison lit fluidisé L-doseur volumétrique 3 permettra de délivrer dans la bouteille 5 qui est par exemple une bouteille de champagne, un volume de particules ou billes de gel d'alginate très précis et très reproductible.

L'exemple non limitatif suivant démontre la précision beaucoup plus grande du dosage obtenu avec une combinaison lit fluidisé-doseur volumétrique comparativement au dosage volumétrique de particules maintenues en suspension par une agitation mécanique.

Dans une première étape, on réalise la fluidisation d'un lit de billes de gel d'alginate dans de l'eau, à l'intérieur de l'appareil représenté schématiquement sur la figure unique. Le diamètre intérieur de la colonne R est de 0,80 m, sa hauteur de 1,60 m, et la distance entre la grille 1 et le point de prélèvement de la suspension fluidisée est de 0,40 m.

Les billes de gel sont constituées d'alginate de calcium et sont préparées selon un procédé connu. Par exemple, on les obtient en faisant tomber en gouttes une solution aqueuse d'alginate de sodium titrant environ 11 g/l, dans une solution aqueuse de 60 g/l de chlorure de calcium. Il se produit un échange d'ions entre le sodium et le calcium, entraînant ainsi la gélification des gouttes sous forme de billes. Le contact avec la solution de chlorure de calcium est maintenu pendant environ 30 minutes, puis on sépare les billes de la solution et on les rince à l'eau déminéralisée.

La masse volumique de ces billes de gel est de 1,013 g/cm3. Elles sont donc légèrement plus denses que l'eau utilisée dans le présent essai.

Le manomètre différentiel 18, permet de mesurer la perte de pression de l'eau lorsqu'elle traverse le lit de billes, tandis qu'un débimètre, (non représenté sur la figure) permet de calculer la vitesse de l'eau dans la zone de fluidisation du lit contenu dans la colonne R.

Les résultats observés pour deux catégories de billes de taille moyenne différente, respectivement 2,6 mm et 1,7 mm, sont donnés dans le tableau I.

**TABLEAU I**

| | | |
|---|---|---|
| Diamètre moyen des billes (mm) | 2,6 | 1,7 |
| Vitesse terminale de chute (cm.s -¹) | 1,5 ± 0,09 | 1,09 ± 0,07 |
| Hauteur du lit de billes au repos (cm) | 70 | 70 |
| Vitesse minimale de fluidisation (mm.s ⁻¹) | 1,02 | 0,52 |
| Vitesse maximale de fluidisation homogène (mm.s ⁻¹) | 10 | 7 |

La vitesse terminale de chute des billes est déterminée en mesurant, dans un essaim de billes de taille sensiblement identique, le temps moyen de chute de ces billes dans de l'eau au repos, sur une hauteur déterminée et sans vitesse initiale.

La vitesse minimale de fluidisation est la vitesse de l'eau au-delà de laquelle le lit de billes commence à se soulever, c'est-à-dire lorsque la porosité du lit commence à augmenter. Elle peut être repérée facilement au moyen du manomètre différentiel 18.

En effet, lorsque la vitesse de l'eau traversant le lit de billes dans l'appareil augmente à partir de la valeur initiale nulle, la perte de pression de l'eau de part et d'autre du lit augmente, puis devient sensiblement constante dès que le lit commence à se soulever en régime de fluidisation homogène. Il suffit donc de repérer la vitesse de l'eau en début de stabilisation de la pression différentielle.

La vitesse maximale de fluidisation homogène est celle au-delà de laquelle la porosité du lit fluidisé n'est plus homogène. Ce phénomène se traduit au manomètre par une reprise de l'augmentation de la perte de pression de l'eau. Cette vitesse maximale, dans le cas du présent essai est égale à environ les deux tiers de la vitesse terminale de chute.

Dans une seconde étape, le lit fluidisé de billes de gel formant une suspension de ces billes dans l'eau et étant maintenu en régime homogène, on effectue des prélèvements, de 20 ml chacun, de cette suspension au moyen d'un dispositif de dosage volumétrique, tel que celui décrit par exemple dans les documents FR-A-2 613 782 et FR-A-2 639 066.

Le poids des billes ainsi prélevées a été mesuré tous les dix prélèvements. Les résultats pour 149 mesures sont donnés dans le tableau II.

A titre comparatif, on a réalisé une suspension de billes dans l'eau au moyen d'une agitation mécanique, les autres conditions étant analogues : taille et quantité initiale de billes, volume de la suspension. On effectue le même nombre de prélèvements en mesurant tous les dix prélèvements le poids des billes prélevées.

On observera que différents modes d'agitation mécanique ont été utilisés. Les résultats relatifs à l'agitation mécanique donnés au tableau II, sont ceux correspondant au meilleur mode d'agitation, c'est-à-dire celui conduisant à un écart type le plus faible entre les différents poids de billes par prélèvement.

**TABLEAU II**

| Mode de suspension | Billes prélevées dans le système à lit fluidisé | Billes prélevées dans le système à agitation mécanique |
|---|---|---|
| Poids moyen de billes par prélèvement (g) | 3,920 | 4,160 |
| Poids maximum (g) | 4,350 | 4,920 |
| Poids minimum (g) | 3,580 | 3,500 |
| Ecart type | 0,150 | 0,260 |

Il apparaît donc clairement de ce tableau que le procédé de dosage selon l'invention d'une suspension de particules dans un fluide, c'est-à-dire effectué à partir d'un lit fluidisé, est très nettement plus précis quant à la quantité de particules délivrées par le dispositif de dosage volumétrique, que le procédé de dosage connu, effectué à partir d'une suspension de particules réalisée par agitation mécanique, ce qui représente un avantage tout à fait surprenant et inattendu.

Par ailleurs, le procédé de l'invention permet d'ajuster très simplement la quantité moyenne de particules délivrées à chaque prélèvement en faisant varier la vitesse du fluide, entre la vitesse minimale de fluidisation et la vitesse maximale de fluidisation homogène, puisque dans cet intervalle de vitesses, la porosité du lit fluidisé, c'est-à-dire la concentration en particules dans la zone du lit, varie de façon sensiblement linéaire en fonction de la vitesse du fluide.

Bien entendu, il serait possible d'opérer de la même façon en remplaçant l'eau par du vin, dont la masse volumique est légèrement inférieure à 1g/cm³, lorsqu'il s'agit d'introduire dans des bouteilles une quantité précise de billes de gel d'alginate de calcium, contenant des levures immobilisées, en vue de réaliser la prise de mousse selon la méthode dite "méthode champenoise", par la technique décrite en particulier dans le document FR-A 2 432 045.

En effet, l'introduction d'une quantité très précise de telles billes d'alginate dans une bouteille de champagne pour effectuer la prise de mousse, permet, après mise sur pointe de la bouteille, c'est-à-dire après mise de la bouteille goulot vers le bas, d'extraire par congélation du contenu du goulot à coup sûr la totalité des billes ayant précédemment servi à la prise de mousse. En d'autres termes on est certain que la bouteille de champagne, après rebouchage ne contient plus aucune bille, et, en toute hypothèse, la congélation du contenu du goulot pourra s'effectuer sur une hauteur de goulot la plus réduite possible ce qui limite avantageusement la perte de vin.

On a donc réalisé suivant l'invention un procédé et un appareil de délivrance d'une quantité déterminée et très précise de particules solides en suspension homogène dans un liquide tel que le vin, via un dispositif de dosage volumétrique, dans un récipient quelconque, tel que par exemple une bouteille ou une boîte de conserve.

Bien entendu, l'invention n'est nullement limitée au mode de réalisation décrit et illustré qui n'a été donné qu'à titre d'exemple.

C'est ainsi que sur le pourtour du récipient ou de la colonne R à lit fluidisé peuvent être prévues une pluralité de conduites 4 débouchant dans une partie de la colonne où le lit fluidisé, avec une expansion déterminée, est obtenu, ces conduites étant raccordées à autant de dispositifs de dosage volumétrique de la suspension dans les bouteilles 5. Egalement, les conduits d'alimentation en particules et en fluide du récipient R peuvent être en un nombre quelconque de même que les appareils de contrôle du lit fluidisé dans ledit récipient.

Egalement, le procédé et l'appareil de l'invention peuvent être utilisés pour toutes sortes de particules de taille et de masse volumique très diverses, le fluide pouvant être un liquide ou un gaz.

## Revendications

1. Procédé de délivrance d'une quantité déterminée de particules en suspension dans un fluide, caractérisé en ce que ladite suspension est une suspension obtenue en réalisant un lit fluidisé ayant une expansion prédéterminée correspondant à une concentration déterminée de particules dans le fluide, la masse volumique des particules étant supérieure à celle dudit fluide, ce après quoi on prélève au moins une partie de cette suspension en lit fluidisé et on la dose avant de l'utiliser pour une application nécessitant l'emploi d'une quantité déterminée de particules.

2. Procédé selon la revendication 1, caractérisé en ce que le fluide précité est un liquide, tel que par exemple du vin.

3. Procédé selon la revendication 1 ou 2, caractérisé en ce que les particules en suspension dans le fluide sont des billes de gel d'alginate dans lesquelles sont éventuellement incorporées des levures.

4. Appareil pour la mise en oeuvre du procédé selon l'une des revendications 1 à 3, du type comprenant un récipient, tel que par exemple une colonne, permettant la réalisation d'un lit fluidisé de particules en suspension dans un fluide, caractérisé en ce que ledit récipient (R) est raccordé par au moins une conduite (4) débouchant dans une partie du récipient où le lit fluidisé est formé, à un dispositif de dosage volumétrique (3) de la suspension prélevée dans le récipient (R), lequel dispositif (3) est susceptible de communiquer avec un moyen devant utiliser une quantité déterminée et précise de particules et constitué par une bouteille par exemple (5).

5. Appareil selon la revendication 4, caractérisé en ce que le volume intérieur de la conduite (4) raccordée au dispositif de dosage volumétrique (3) est beaucoup plus faible que le volume d'une dose à délivrer par ledit dispositif (3).

6. Appareil suivant la revendication 4 ou 5, caractérisé en ce que le récipient précité (R) est alimenté en particules par au moins un conduit (6) débouchant dans ledit récipient.

7. Appareil selon l'une des revendications 4 à 6, caractérisé en ce que le récipient (R) est par ailleurs alimenté en fluide par au moins un conduit (8) raccordé à une source de fluide et débouchant dans le récipient (R), de préférence à la partie supérieure de celui-ci.

8. Appareil selon l'une des revendications 4 à 7, caractérisé en ce que le dispositif de dosage volumétrique (3) est apte à doser une suspension constituée de billes de gel, tel que gel d'alginate en suspension dans un liquide tel que le vin.

## Patentansprüche

1. Verfahren zur Abgabe einer bestimmten Menge von in einem fliessfähigen Mittel suspendierten Teilchen, dadurch gekennzeichnet, dass die besagte Suspension eine Suspension ist, die durch Schaffung eines Wirbelfliessbettes mit einer einer bestimmten Konzentration von Teilchen in dem fliessfähigen Mittel entsprechenden vorbestimmten Expansion erhalten worden ist, wobei die Dichte der Teilchen grösser als diejenige des besagten fliessfähigen Mittels ist, worauf man wenigstens einen Teil dieser Suspension im Wirbelfliessbett entnimmt und man ihn quantitativ bestimmt, bevor man ihn für eine den Gebrauch einer bestimmten Menge von Teilchen benötigende Anwendung verwendet.

2. Verfahren nach Anspruch 1, dadurch gekennzeichnet, dass das vorgenannte fliessfähige Mittel eine Flüssigkeit, wie z.B. Wein ist.

3. Verfahren nach Anspruch 1 oder 2, dadurch gekennzeichnet, dass die in dem fliessfähigen Mittel suspendierten Teilchen Kügelchen aus einem Alginatgel sind, in welchen gegebenenfalls Hefen einverleibt sind.

4. Gerät zur Durchführung des Verfahrens nach einem der Ansprüche 1 bis 3, derjenigen Gattung, mit einem die Schaffung eines Wirbelfliessbettes von in einem fliessfähigen Mittel suspendierten Teilchen gestattenden Behälter, wie z.B. einer Säule, dadurch gekennzeichnet, dass der besagte Behälter (R) durch wenigstens eine in einen Teil des Behälters, wo das Wirbelfliessbett gebildet wird, einmündende Leitung (4) mit einer Vorrichtung (3) für die Volumendosierung der in dem Behälter (R) entnommenen Suspension verbunden ist, wobei die Vorrichtung (3) fähig ist, mit einem z.B. durch eine Flasche (5) gebildeten Mittel zur Verwendung einer bestimmten und genauen Menge von Teilchen in Verbindung zu sein.

5. Gerät nach Anspruch 4, dadurch gekennzeichnet, dass das innere Volumen der an die Vorrichtung (3) zur Volumendosierung angeschlossenen Leitung (4) viel kleiner als das Volumen einer durch das besagte Gerät (3) abzugebenden Dosis ist.

6. Gerät nach Anspruch 4 oder 5, dadurch gekennzeichnet, dass der vorgenannte Behälter (R) durch wenigstens eine in den besagten Behälter ausmündende Leitung (6) mit Teilchen gespeist wird.

7. Gerät nach einem der Ansprüche 4 bis 6, dadurch gekennzeichnet, dass der Behälter (R) ausserdem mit fliessfähigem Mittel durch wenigstens eine an eine Fluidquelle angeschlossene und in den Behälter (R) vorzugsweise am oberen Teil desselben ausmündende Leitung (8) gespeist wird.

8. Gerät nach einem der Ansprüche 4 bis 7, dadurch gekennzeichnet, dass die Volumendosierungsvorrichtung (3) geeignet ist, eine aus Kügelchen von einem Gel, wie einem in einer Flüssigkeit wie Wein suspendierten Alginatgel bestehende Suspension zu dosieren.

## Claims

1. Method of dispensing a determined amount of particles in suspension in a fluid, characterized in that the said suspension is a suspension obtained by providing a fluidized bed with a predetermined expansion corresponding to a determined concentration of particles in the fluid, the volumic mass of the particles being greater than that of the said fluid, whereafter one takes at least one portion from this suspension in a fluidized bed and one meters it before using it for an application requiring the use of a determined amount of particles.

2. Method according to claim 1, characterized in that the aforesaid fluid is a liquid such for example as wine.

3. Method according to claim 1 or 2, characterized in that the particles in suspension in the fluid are balls of a gel of alginate into which are possibly incorporated yeasts.

4. Apparatus for carrying out the method according to one of claims 1 to 3, of the type comprising a container such for example as a column permitting the provision of a fluidized bed of particles in suspension in a fluid, characterized in that the said container (R) is connected by at least one duct (4) opening into one portion of the container where the fluidized bed is formed, to a device (3) for the volumetric metering of the suspension taken from the container (R), which device (3) is adapted to communicate with a means adapted to use a determined and precise amount of particles and constituted by a bottle (5) for example.

5. Apparatus according to claim 4, characterized in that the internal volume of the duct (4) connected to the volumetric metering device (3) is much smaller than the volume of a metered amount to be delivered by the said device (3).

6. Apparatus according to claim 4 or 5, characterized in that the aforesaid container (R) is fed with particles by at least one duct (6) opening into the said container.

7. Apparatus according to one of claims 4 to 6, characterized in that the container (R) is moreover fed with fluid by at least one duct (8) connected to a source of fluid and opening into the container (R) preferably at the upper portion of the latter.

8. Apparatus according to one of claims 4 to 7, characterized in that the volumetric metering device (3) is adapted to meter a suspension consisting of balls of gel such as a gel of alginate in suspension in a liquid such as wine.
